(19) Europäisches Patentamt
European Patent Office
Office européen des brevets

(11) EP 0 531 837 B1

(12) EUROPÄISCHE PATENTSCHRIFT

(45) Veröffentlichungstag und Bekanntmachung des Hinweises auf die Patenterteilung:
**27.03.1996 Patentblatt 1996/13**

(51) Int. Cl.[6]: **A01N 37/50**
// (A01N37/50, 55:00, 47:38, 43:653)

(21) Anmeldenummer: **92114812.8**

(22) Anmeldetag: **29.08.1992**

# (54) Fungizide Mischungen

Fungicidal mixtures

Mélanges fongicides

(84) Benannte Vertragsstaaten:
**AT BE CH DE DK ES FR GB GR IT LI NL PT SE**

(30) Priorität: **12.09.1991 DE 4130298**

(43) Veröffentlichungstag der Anmeldung:
**17.03.1993 Patentblatt 1993/11**

(73) Patentinhaber: **BASF Aktiengesellschaft**
**D-67063 Ludwigshafen (DE)**

(72) Erfinder:
- **Sauter, Hubert**
**W-6800 Mannheim (DE)**
- **Schelberger, Klaus**
**W-6701 Goennheim (DE)**
- **Saur, Reinhold, Dr.**
**W-6737 Boehl-Iggelheim (DE)**
- **Lorenz, Gisela, Dr.**
**W-6730 Neustadt (DE)**
- **Ammermann, Eberhard, Dr.**
**W-6148 Heppenheim (DE)**

(56) Entgegenhaltungen:
**EP-A- 0 196 038**
**EP-A- 0 253 213**
**EP-A- 0 254 426**
**EP-A- 0 423 566**
**EP-A- 0 425 857**

Bemerkungen:
Die Akte enthält technische Angaben, die nach dem Eingang der Anmeldung eingereicht wurden und die nicht in dieser Patentschrift enthalten sind.

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

EP 0 531 837 B1

## Beschreibung

Die vorliegende Erfindung betrifft fungizide Mischungen mit synergistischer fungizider Wirkung und Verfahren zur Bekämpfung von Pilzen mit diesen Mischungen.

Es ist bekannt, den α-Methoximino-2-[2-Methylphenoxy)-methyl]phenylessigsäuremethylester

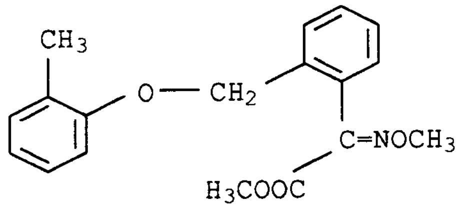

als Fungizid zu verwenden (EP-A 253 213, EP-A 254 426). Es ist ferner bekannt, einen Azolwirkstoff ausgewählt aus der folgenden Gruppe:
(Z)-2-(1,2,4-Triazol-1-ylmethyl)-2-(4-fluorphenyl)-3-(2-chlorphenyl)-oxiran der Formel

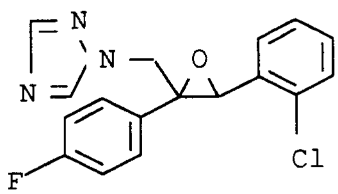

(EP 196 038),

1-Butyl-1-(2,4-dichlorphenyl)-2-(1,2,4-triazol-1-yl)-ethanol (common name Hexaconazole),
1-(4-Fluorphenyl)-1-(2-fluorphenyl)-2-(1,2,4-triazol-1-yl)-ethanol (common name Flutriafol),
(RS)-4-(4-Chlorphenyl)-2-phenyl-2- (1H-1,2,4-triazol-1-yl-methyl)-butyronitril,
1-[(2 RS, 4 RS; 2 RS, 4 SR)-4-Brom-2-(2,4-dichlorphenyl)-tetrahydrofurfuryl]-1H-1,2,4-triazol,
3-(2,4-Dichlorphenyl)-2-(1H- 1,2,4-triazol-1-yl)-quinazolin-4(3H)-on,
(RS)-2,2-Dimethyl-3-(2-chlorbenzyl)-4-(1H-1,2,4-triazol-1-yl)-butan-3-ol,
Bitertanol, Triadimefon, Triadimenol, Cyproconazole, Dichlobutrazol, Difenoconazole, Diniconazole, Etaconazole, Propiconazole, Flusilazole, Tebuconazole, Imazalil, Penconazole, Prochloraz, Tetraconazole oder ein Salz eines solchen Azolwirkstoffs als Fungizid zu verwenden.

Es wurde nun gefunden, daß eine Mischung aus

a) α-Methoximino-2-[2-methylphenoxy)-methyl]-phenylessigsäuremethylester

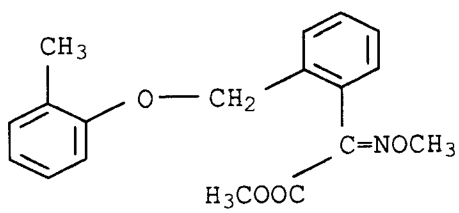

und

b) einem Azolwirkstoff ausgewählt aus der folgenden Gruppe:
(Z)-2-(1,2,4-Triazol-1-ylmethyl)-2-(4-fluorphenyl)-3-(2-chlorphenyl)-oxiran der Formel

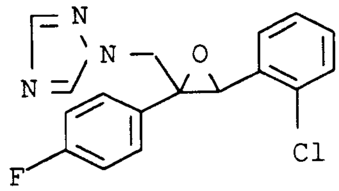

1-Butyl-1-(2,4-dichlorphenyl)-2-(1,2,4-triazol-1-yl)-ethanol (common name Heyaconazole),
1-(4-Fluorphenyl)-1-(2-fluorphenyl)-2-(1,2,4-triazol-1-yl)-ethanol (common name Flutriafol),
(RS)-4- (4-Chlorphenyl)-2-phenyl-2-(1H-1,2,4-triazol-1-ylmethyl)-butyronitril,
1-[(2 RS, 4 RS; 2 RS, 4 SR)-4- Brom-2-(2,4-dichlorphenyl)-tetrahydrofurfuryl]-1H- 1,2,4-triazol,
3-(2,4-Dichlorphenyl)-2-(1H-1,2,4-triazol-1-yl)-quinazolin-4(3H)-on,
(RS)-2,2-Dimethyl- 3(2-chlorbenzyl)-4-(1H-1,2,4-triazol-1-yl)-butan-3-ol,
Bitertanol, Triadimefon, Triadimenol, Cyproconazole, Dichlobutrazol, Difenoconazole, Diniconazole, Etaconazole, Propiconazole, Flusilazole, Tebuconazole, Imazalil, Penconazole, Prochloraz, Tetraconazole oder einem Salz eines solchen Azolwirkstoffs eine synergistische fungizide Wirkung hat.

Das Mischungsverhältnis (Gewichtsverhältnis) der Verbindungen a) und b) wird so gewählt, daß eine synergistische fungizide Wirkung auftritt, beispielsweise Verbindung a):Verbindung b) wie 10:1 bis 1:10, insbesondere 5:1 bis 1:5, vorzugsweise 3:1 bis 1:3. Die synergistische Wirkung der Mischung zeigt sich darin, daß die fungizide Wirkung der Mischung a) + b) größer ist als die Summe der fungiziden Wirkungen von a) und b).

Die Komponente a) kann hinsichtlich der -C=N-Doppelbindung in zwei stereoisomeren Formen vorliegen. Bevorzugt ist das (E)-Isomere.

Die Erfindung umfaßt Mischungen, die die reinen Isomeren der Verbindung a) enthalten, insbesondere das (E)-Isomere, als auch Mischungen, die Gemische der Isomeren enthalten.

Bevorzugt werden solche Mischungen, die die Komponente a) überwiegend in Form des (E)-Isomeren enthalten.

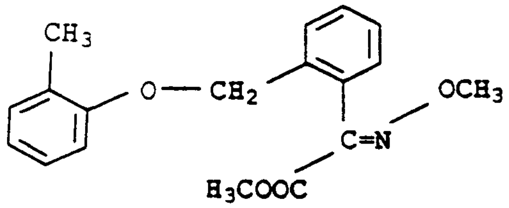

a, (E)-Isomer

Die Azolwirkstoffe b) können auch in Form ihrer Salze vorliegen. Auch diese Mischungen werden von der Erfindung umfaßt.

Salze werden hergestellt durch Umsetzung mit Säuren z. B. Halogenwasserstoffsäuren wie Fluorwasserstoffsäure, Chlorwasserstoffsäure, Bromwasserstoffsäure oder Jodwasserstoffsäure oder Schwefelsäure, Phosphorsäure, Salpetersäure oder organischen Säuren wie Essigsäure, Trifluoressigsäure, Trichloressigsäure, Propionsäure, Glycolsäure, Milchsäure, Bernsteinsäure, Zitronensäure, Benzoesäure, Zimtsäure, Oxalsäure, Ameisensäure, Benzolsulfonsäure, p-Toluolsulfonsäure, Methansulfonsäure,Salicylsäure, p-Aminosalicylsäure oder 1,2-Naphthalin-disulfonsäure.

In der Praxis setzt man vorteilhaft die reinen Wirkstoffe a) und b) ein, denen man auch weitere Wirkstoffe wie Insektizide, Akarizide, Nematizide, Herbizide, weitere Fungizide, Wachstumsregulatoren und/oder Düngemittel zufügen kann.

Die erfindungsgemäßen fungiziden Mischungen können beispielsweise in Form von direkt versprühbaren Lösungen, Pulvern, Suspensionen, auch hochprozentigen wäßrigen, öligen oder sonstigen Suspensionen oder Dispersionen, Emulsionen, Öldispersionen, Pasten, Stäubemitteln, Streumitteln oder Granulaten durch Versprühen, Vernebeln, Verstäuben, Verstreuen oder Gießen angewendet werden. Die Anwendungsformen richten sich nach den Verwendungszwecken; sie sollten in jedem Fall möglichst die feine Verteilung der erfindungsgemäßen Wirkstoffe gewährleisten.

Normalerweise werden die Pflanzen mit den Mischungen besprüht oder bestaubt oder die Samen der Pflanzen mit den Mischungen behandelt.

Die Formulierungen werden in bekannter Weise hergestellt, z. B. durch Verstrecken der Mischung mit Lösungsmitteln und/oder Trägerstoffen, gewünschtenfalls unter Verwendung von Emulgiermitteln und Dispergiermitteln, wobei im Falle von Wasser als Verdünnungsmittel auch andere organische Lösungsmittel als Hilfslösungsmittel verwendet werden können. Als Hilfsstoffe kommen dafür im wesentlichen in Betracht: Losungsmittel wie Aromaten (z. B. Xylol), chlorierte Aromaten (z. B. Chlorbenzole), Paraffine (z. B. Erdölfraktionen), Alkohole (z. B. Methanol, Butanol), Ketone (z. B. Cyclohexanon), Amine (z. B. Ethanolamin, Dimethylformamid) und Wasser; Trägerstoffe wie natürliche Gesteinsmehle (z. B. Kaoline, Tonerden, Talkum, Kreide) und synthetische Gesteinsmehle (z. B. hochdisperse Kieselsäure, Silikate); Emulgiermittel wie nichtionogene und anionische Emulgatoren (z. B. Polyoxyethylen-Fettalkohol-Ether, Alkylsulfonate und Arylsulfonate) und Dispergiermittel wie Lignin-Sulfitablaugen und Methylcellulose.

Als oberflächenaktive Stoffe kommen die Alkali-, Erdalkali-, Ammoniumsalze von aromatischen Sulfonsäure, z. B. Lignin-, Phenol-, Naphthalin- und Dibutylnaphthalinsulfonsäure, sowie von Fettsäuren, Alkyl- und Alkylarylsulfonaten, Alkyl-, Laurylether- und Fettalkoholsulfaten, sowie Salze sulfatierter Hexa-, Hepta- und Octadecanolen, sowie von Fettalkoholglykolether, Kondensationsprodukte von sulfoniertem Naphthalin und seiner Derivate mit Formaldehyd, Kondensationsprodukte des Naphthalins bzw. der Naphthalinsulfonsäuren mit Phenol und Formaldehyd, Polyoxyethylenoctylphenolether, ethoxyliertes Isooctyl-, Octyl- oder Nonylphenyl, Alkylphenol-, Tributylphenylpolyglykolether, Alkylarylpolyetheralkohole, Isotridecylalkohol, Fettalkoholethylen-oxid-Kondensate, ethoxyliertes Rizinusöl, Polyoxythylenalkylether oder Polyoxypropylen, Laurylalkoholpolyglykoletheracetat, Sorbitester, Lignin-Sulfitablaugen oder Methylcellulose in Betracht.

Pulver-, Streu- und Stäubemittel können durch Mischen oder gemeinsames Vermahlen der wirksamen Substanzen mit einem festen Trägerstoff hergestellt werden.

Granulate, z. B. Umhüllungs-, Imprägnierungs- und Homogengranulate können durch Bindung der Wirkstoffreste Trägerstoffe hergestellt werden. Feste Trägerstoffe sind Mineralerden wie Silicagel, Kieselsäuren, Kieselgele, Silikate, Talkum, Kaolin, Kalkstein, Kalk, Kreide, Bolus, Löß, Ton, Dolomit, Diatomeenerde, Calcium- und Magnesiumsulfat, Magnesiumoxid, gemahlene Kunststoffe, Düngemittel, wie Ammoniumsulfat, Ammoniumphosphat, Ammoniumnitrat, Harnstoffe und pflanzliche Produkte, wie Getreidemehl, Baumrinden-, Holz- und Nußschalenmehl, Cellulosepulver oder andere feste Trägerstoffe.

Die Mischungen zeichnen sich durch eine hervorragende Wirksamkeit gegen ein breites Spektrum von pflanzenpathogenen Pilzen, insbesondere aus der Klasse der Ascomyceten und Basidiomyceten, aus. Sie sind zum Teil systemisch wirksam und können als Blatt- und Bodenfungizide eingesetzt werden.

Besondere Bedeutung haben sie für die Bekämpfung einer Vielzahl von Pilzen an verschiedenen Kulturpflanzen wie Weizen, Roggen, Gerste, Hafer, Reis, Mais, Gras, Baumwolle, Soja, Kaffee, Zuckerrohr, Wein, Obst- und Zierpflanzen und Gemüsepflanzen wie Gurken, Bohnen und Kürbisgewächsen, sowie an den Samen dieser Pflanzen.

Die Verbindungen werden angewendet, indem man die Pilze oder die vor Pilzbefall zu schützenden Saatgüter, Pflanzen, Materialien oder den Erdboden mit einer fungizid wirksamen Menge der Mischungen behandelt.

Die Anwendung erfolgt vor oder nach der Infektion der Materialien, Pflanzen oder Samen durch die Pilze.

Speziell eignen sich die Mischungen zur Bekämpfung folgender Pflanzenkrankheiten:

Erysiphe graminis (echter Mehltau) in Getreide, Erysiphe cichoracearum und Sphaerotheca fuliginea an Kürbisgewächsen,
Podosphaera leucotricha an Äpfeln,
Uncinula necator an Reben,
Puccinia-Arten an Getreide,
Rhizoctonia-Arten an Baumwolle und Rasen,
Ustilago-Arten an Getreide und Zuckerrohr,
Venturia inaequalis (Schorf) an Äpfeln,
Helminthosporium-Arten an Getreide,
Septoria nodorum an Weizen,
Rhynchosporium secalis an Getreide
Botrytis cinerea (Grauschimmel) an Erdbeeren, Reben,
Cercospora arachidicola an Erdnüssen,
Pseudocercoporella herpotrichoides an Weizen, Gerste,
Pyricularia oryzae an Reis,
Phytophthora infestans an Kartoffeln und Tomaten,
Fusarium- und Verticillium-Arten an verschiedenen Pflanzen,
Plasmopara viticola an Reben,
Alternaria-Arten an Gemüse und Obst.

Die neuen Mischungen können auch im Materialschutz (Holzschutz) eingesetzt werden, z. B. gegen Paecilomyces variotii.

Die fungiziden Mittel enthalten im allgemeinen zwischen 0,1 und 95, vorzugsweise zwischen 0,5 und 90 Gew.-% Wirkstoff.

Die Aufwandmengen der erfindungsgemäßen Mischungen liegen je nach Art des gewünschten Effektes zwischen 0,01 und 3 kg Wirkstoffmischung pro ha.

Bei der Saatgutbehandlung werden im allgemeinen Aufwandmengen der Wirkstoffmischungen von 0,001 bis 50 g, vorzugsweise 0,01 bis 10 g je Kilogramm Saatgut benötigt.

Beispiel

Eradikative Wirkung gegen Weizenmehltau

Weizenpflanzen der Sorte "Kanzler" wurden, nachdem sie 3 Blätter entwickelt hatten, in einem Versuch mit Weizenmehltau (Erysiphe graminis var. tritici) behandelt, der gegenüber Fungiziden, die einen Triazolrest im Molekül enthalten, unempfindlich war, und in einem weiteren Versuch mit Weizenmehltau behandelt, der gegenüber Fungiziden, die einen Triazolrest im Molekül enthalten, empfindlich war, und nach der Entwicklung des Pilzbefalls auf 5 % der Blattfläche mit den wäßrigen Wirkstoffaufbereitungen in den angegebenen Konzentrationen behandelt. Die Wassermenge entsprach 400 l/ha. Die Pflanzen wurden im Gewächshaus für 20 Tage bei 18 bis 22°C kultiviert. Danach erfolgte die Auswertung durch Feststellung der befallenen Blattfläche in Prozent. Diese Werte wurden in Wirkungsgrade umgerechnet. Der Wirkungsgrad in der unbehandelten Kontrolle wurde auf 0 festgesetzt. Der Wirkungsgrad, wenn 0 Prozent der Blattfläche von Pilz befallen sind, wurde auf 100 festgesetzt. Die zu erwartenden Wirkungsgrade der Wirkstoffmischung wurden nach der Colby-Formel (Colby, S.R. "Calculating synergistic and antagonistic responses of herbicide combinations", Weeds, 15, S. 20 - 22, 1967) ermittelt und mit den beobachteten Wirkungsgraden verglichen.

Die Werte für die fungizide Wirkung schwanken zwischen den einzelnen Versuchen, weil die Pflanzen in den einzelnen Versuchen unterschiedlich starken Befall aufweisen und dadurch auch die Zahlenwerte der fungiziden Wirkung unterschiedlich ausfallen. Es können daher nur die Ergebnisse innerhalb desselben Versuchs miteinander verglichen werden.

$$\text{Colby-Formel } E = x + y - \frac{x \cdot y}{100}$$

E = zu erwartender Wirkungsgrad, ausgedrückt in % der unbehandelten Kontrolle, beim Einsatz der Wirkstoffe A und B in den Konzentrationen von m und n

X = der Wirkungsgrad, ausgedrückt in % der unbehandelten Kontrolle, beim Einsatz des Wirkstoffes A in einer Konzentration von m

Y = der Wirkungsgrad, ausgedrück in % der unbehandelten Kontrolle, beim Einsatz des Wirkstoffes B in einer Konzentration von n.

Für die Versuche wurden die folgenden Verbindungen verwendet.

I. α-Methoxinino-2-[2-methylphenoxy)-methyl]-phenylessigsäuremethylester
II. (Z)-2-(1,2,4-Triazol-1-ylmethyl)-2-(4-fluorphenyl)-3-(2-chlorphenyl)-oxiran
III. Tebuconazol (RS)-1-(4-chlorophenyl)-4,4-dimethyl-3-(1H-1,2,4-triazol-1-ylmethyl)-pentan 3-ol

Versuch 1: Erysiphe graminis-Test (Weizen) eradikativ Erysiphe graminis triazolresistent

| Wirkstoff | Wirkstoffkonzentration in der Spritzbrühe in % | Wirkungsgrad in % der unbehandelten Kontrolle |
|---|---|---|
| Kontrolle (Unbehandelt) | - | 0 |
| I. Wirkstoff bekannt | 0,05 | 46 |
| II. Wirkstoff bekannt | 0,05 | 18 |
| III. Tebuconazol bekannt | 0,05 | 14 |
| Erfindungsgemäße Mischung | | |
| I. + II. Mischungsverhältnis 1:3 0,01 + 0,03 | | 75 |
| I. + III. Mischungsverhältnis 1:3 0,01 + 0,03 | | 80 |

Das Ergebnis zeigt, daß 0,04 % (0,01 + 0,03) der Mischung eine bessere fungizide Wirkung aufweisen als 0,05 % der Einzelwirkstoffe.

Der gleiche Versuch mit triazolsensiblem Erysiphe graminis durchgeführt, bestätigte das oben dargestellte Versuchsergebnis.

Versuch 2: Erysiphe graminis-Test (Weizen) eradikativ Erysiphe graminis triazolresistent

| Wirkstoff | Wirkstoffkonzentration in der Spritzbrühe in % | Wirkungsgrad in % der unbehandelten Kontrolle |
|---|---|---|
| Kontrolle (Unbehandelt) | - | 0 |
| I. Wirkstoff bekannt | 0,1<br>0,01 | 68<br>24 |
| II. Wirkstoff bekannt | 0,1<br>0,01 | 37<br>9 |
| III. Tebuconazol bekannt | 0,1<br>0,01 | 35<br>8 |
| Erfindungsgemäße Mischung | beobachteter Wirkungsgrad | berechneter Wirkungsgrad*) |
| I + II 0,01 + 0,01 Mischungsverhältnis 1:1 | 51 | 30,8 |
| I + II 0,1 + 0,1 Mischungsverhältnis 1:1 | 100 | 79,8 |
| I + II 0,1 + 0,01 Mischungsverhältnis 10:1 | 85 | 70,8 |
| I + II 0,01 + 0,1 Mischungsverhältnis 1:10 | 74 | 52,1 |
| I + III 0,01 + 0,01 Mischungsverhältnis 1:1 | 49 | 30,1 |
| I + III 0,1 + 0,1 Mischungsverhältnis 1:1 | 100 | 79,2 |

| Erfindungsgemäße Mischung | beobachteter Wirkungsgrad | berechneter Wirkungsgrad*) |
|---|---|---|
| I + III 0,1 + 0,01 Mischungsverhältnis 10:1 | 86 | 70,5 |
| I + III 0,01 + 0,1 Mischungsverhältnis 1:10 | 71 | 50,6 |

*) Berechnet nach der Colby-Formel

Das Ergebnis zeigt, daß die beobachteten Wirkungsgrade besser sind als die nach Colby berechneten Wirkungsgrade.

Der gleiche Versuch mit triazolsensiblem Erysiphe graminis durchgeführt, bestätigte das oben dargestellte Versuchsergebnis.

## Patentansprüche

1. Fungizides Mittel, enthaltend eine fungizid wirksame Menge einer synergistischen Mischung aus

   a) α-Methoxyimino-2-[(2-Methylphenoxy)-methyl]-phenylessigsäuremethylester

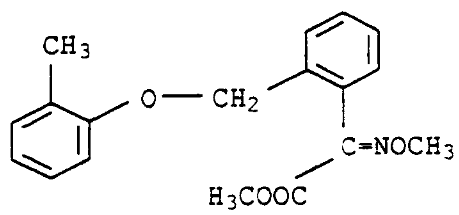

   und

   b) einem Azolwirkstoff ausgewählt aus der folgenden Gruppe: (Z)-2-(1,2,4-Triazol-1-ylmethyl)-2-(4-fluorphenyl)-3-(2-chlorphenyl)-oxiran der Formel

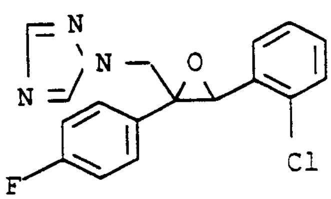

   1-Butyl-1-(2,4-dichlorphenyl)-2-(1,2,4-triazol-1-yl)-ethanol (common name Hexaconazol),
   1-(4-Fluorphenyl)-1-(2-fluorphenyl)-2-(1,2,4-triazol-1-yl)-ethanol (common name Flutriafol),
   (RS)-4-(4-chlorphenyl)-2-phenyl-2-(1H-1,2,4-triazol-1-ylmethyl)-butyronitrile,
   1-[2-(RS,4RS;2RS,4SR)-4-bromo-2-(2,4-dichlorophenyl)-tetrahydrofurfuryl]-1H-1,2,4-triazole,
   3-(2,4-dichlorophenyl)-2-(1H-1,2,4-triazol-1-yl)-quinazolin-4(3H)-one,
   (RS)-2,2-Dimethyl-3-(2-chlorobenzyl)-4-(1H-1,2,4-triazol-1-yl)-butan-3-ol,
   Bitertanol, Triadimefon, Triadimenol, Cyproconazole, Dichlobutrazol, Difenoconazole, Diniconazole, Etaconazole, Propiconazole, Flusilazole, Tebuconazol, Imazalil, Penconazole, Prochloraz, Tetraconazole und einem Salz eines solchen Azolwirkstoffs.

2. Fungizides Mittel gemäß Anspruch 1, enthaltend die Verbindungen a) und b) im Gewichtsverhältnis a:b wie 10:1 bis 1:10.

3. Verfahren zur Bekämpfung von Pilzen, dadurch gekennzeichnet, daß man eine fungizid wirksame Menge einer synergistischen Mischung gemäß Anspruch 1 auf die Pilze oder auf die durch Pilzbefall bedrohten Materialien, Flächen, Pflanzen oder Saatgüter einwirken läßt.

**Claims**

1. A fungicidal composition comprising a fungicidally active amount of a synergistic mixture of

a) methyl α-methoxyimino-2-[(2-methylphenoxy)methyl]-phenylacetate

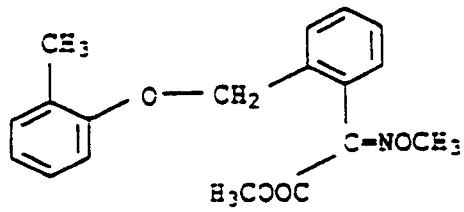

and

b) an azole active compound selected from the following group:

(Z)-2-(1,2,4-triazol-1-ylmethyl)-2-(4-fluorophenyl)-3-(2-chlorophenyl)oxirane of the formula

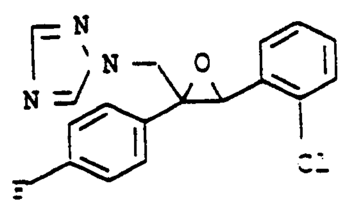

1-butyl-1-(2,4-dichlorophenyl)-2-(1,2,4-triazol-1-yl)ethanol (common name hexaconazole),
1-(4-fluorophenyl)-1-(2-fluorophenyl)-2-(1,2,4-triazol-1-yl)ethanol (common name flutriafol),
(RS)-4-(4-chlorophenyl)-2-phenyl-2-(1H-1,2,4-triazol-1-ylmethyl)butyronitrile,
1-[2-(RS,4RS;2RS,4SR)-4-bromo-2-(2,4-dichlorophenyl)tetrahydrofurfuryl]-1H-1,2,4-triazole,
3-(2,4-dichlorophenyl)-2-(1H-1,2,4-triazol-1-yl)-quinazolin-4(3H)-one,
(RS)-2,2-dimethyl-3-(2-chlorobenzyl)-4-(1H-1,2,4-triazol-1-yl)butan-3-ol,
bitertanol, triadimefon, triadimenol, cyproconazole, diclobutrazol, difenoconazole, diniconazole, etaconazole, propiconazole, flusilazole, tebuconazole, imazalil, penconazole, prochloraz, tetraconazole and a salt of such an azole active compound.

2. A fungicidal composition as claimed in claim 1, comprising the compounds a) and b) in a weight ratio a:b such as 10:1 to 1:10.

3. A method for controlling fungi, which comprises allowing a fungicidal active amount of a synergistic mixture as claimed in claim 1 to act on the fungi or on the materials, surfaces, plants or seed threatened by fungal attack.

**Revendications**

1. Agent fongicide contenant une quantité à effet fongicide d'un mélange synergique constitué de :

a) ester méthylique d'acide α-méthoxyimino-2-[(2-méthylphénoxy)-méthyl]-phényle-acétique

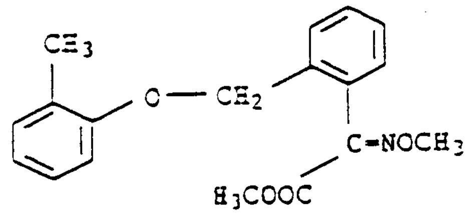

et

b) un composé azolique choisi parmi le groupe suivant :

(Z)-2-(1,2,4-triazol-1-ylméthyl)-2-(4-fluorophényl)-3-(2-chlorophényl)-oxirane de formule :

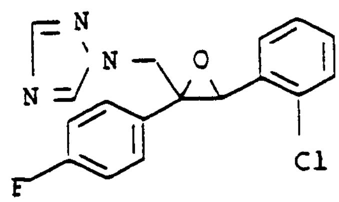

1-butyl-1-(2,4-dichlorophényl)-2-(1,2,4-triazol-1-yl)-éthanol (nom commun hexaconazol),
1-(4-fluorophényl)-1(2-fluorophényl)-2-(1,2,4-triazol-1-yl)-éthanol (nom commun flutriafol),
(RS)-4-(4-chlorophényl)-2-phényl-2-(1H-1,2,4-triazol-1-ylméthyl)-butyronitrile,
1-[2-(RS, 4RS ; 2RS, 4SR)-4-bromo-2-(2,4-dichlorophényl)-tétrahydrofurfuryl]-1H-1,2,4-triazole,
3-(2,4-dichlorophényl)-2-(1H-1,2,4-triazol-1-yl)-quinazolin-4(3H)-one, (RS)-2,2-diméthyl-3-(2-chlorobenzyl)-4-(1H-1,2,4-triazol-1-yl)-butan-3-ol,
bitertanol, triadiméfon, triadiménol, cyproconazole, dichlobutrazol, difénoconazole, diniconazole, étaconazole, propiconazole, flusilazole, tébuconazol, imazalil, penconazole, prochloraz, tétraconazole et un sel de tels composés azoliques.

2. Agent fongicide selon la revendication 1, comportant les composés a) et b) dans un rapport a:b de 10:1 à 1:10.

3. Procédé de lutte contre les champignons, caractérisé par le fait qu'on met en oeuvre une quantité efficace à effet fongicide d'un mélange synergique selon la revendication 1 sur les champignons ou les matériaux, surfaces, plantes ou semences menacés d'une attaque par les champignons.